# EUROPEAN PATENT APPLICATION

(11) **EP 0 887 328 A2**
(43) Date of publication of application: **30.12.1998**
(21) Application number: 98305114.5
(22) Date of filing: 29.06.1998
(51) Int. Cl.: C05F 9/00, C05F 9/02

(54) **Conversion of waste material using earth worms**

(30) Priority: 27.06.1997 GB 9713475
(71) Applicant: Taylor, Simon, Eynesbury, Cambs. PE19 2TA (GB); Gentle, Mark Lennox, Eynesbury, Cambs. PE19 2TA (GB)
(72) Inventor: Taylor, Simon, Eynesbury, Cambs. PE19 2TA (GB); Gentle, Mark Lennox, Eynesbury, Cambs. PE19 2TA (GB)
(74) Representative: W.P. THOMPSON & CO.

(57) **Abstract**

Biodegradable waste material is converted by worms into a utilisable end product. A bed of wood chips and grit hosts the worms and waste material is deposited on the bed. The temperature, humidity and amount of air in the bed is controlled, as is also the amount of waste deposited. Worm castings are removed from the bottom of the bed by actuation of a retrieval mechanism. In an automated system a hopper (26) runs on a track (28) to traverse the bed and deposit waste material. A conveyor (30) removes the castings.

## Description

This invention relates to methods of and apparatus for the conversion of biodegradable waste materials into a utilisable end product. More particularly, this invention relates to a method of and apparatus using worms to convert biodegradable waste into useful agricultural or horticultural material for example.

Previous methods used to convert organic waste into compost have been restricted by the slow process in which the organic material decomposes using natural processes. Previous methods have also suffered from disadvantages in terms of the volume of material which they can process.

It is an object of the present invention to convert any reasonable type of organic material (i.e. biodegradable material) into useable compost using a large scale process. The present process depends on worms digesting the organic material with the resultant worm castings being a useable organic material. The method involves spreading, either manually or automatically, the organic waste material on top of a bed and then allowing worms to inhabit this layer. The worm castings can later be removed by a variety of methods.

In accordance with the invention there is provided a method of converting biodegradable waste material into a utilisable end product, which comprises establishing a bed of material conducive to sustaining worms, adding worms to the bed, depositing waste material on top of the bed, establishing and maintaining a controlled environment for the worms, and removing worm castings from the bottom of the bed.

Also in accordance with the invention there is provided apparatus for converting biodegradable waste material into a utilisable end product, which comprises support means for a bed of material conducive to sustaining worms, means for establishing and maintaining a controlled environment for worms in said bed, and means for the controlled retrieval of worm castings from the bottom of the bed.

An embodiment of the invention will now be described by way of example and with reference to the drawings, in which:
Figure 1 is a diagram of a housing suitable for the carrying out of the process;
Figure 2 shows the ability of the roof and sides of the housing to open out;
Figure 3 shows a block configuration capable of being used as the floor for the bed in the housing;
Figure 4 shows an alternative construction for the floor of the bed;
Figure 5 shows a further alternative construction for the floor of the bed; and,
Figure 6 shows an apparatus suitable for use in the treatment of sewage sludge and like matter.

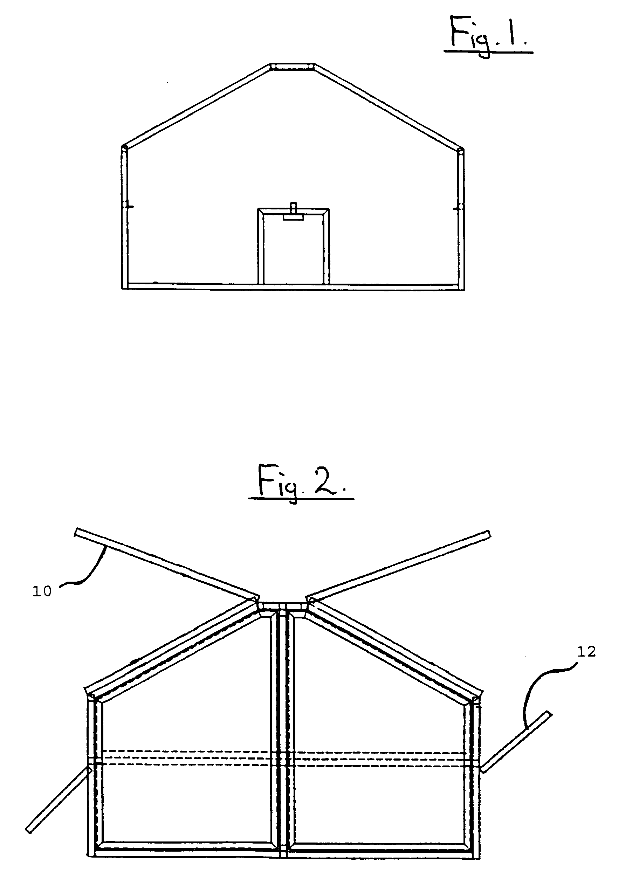

Figures 1 and 2 show a housing within which the apparatus for carrying out the treatment process is located, as will be described below. The housing shown in Figure 1 can be of any suitable size and is constructed basically from an insulating material such as polystyrene panels. These polystyrene panels have a preferred thickness of 50 mm and have aluminium and steel facings. Within the housing one can create an ideal controlled environment for worms to function in and breed in. The interior can be controlled in terms of temperature and humidity. Figure 2 shows that roof panels 10 and side panels 12 of the housing can be opened for access and/or ventilation.

Within the housing is located a "bed" for worms which digest the waste material and produce castings, i.e. the utilisable end product. The bed comprises a support, for example a grid or mesh structure, upon which the material which the worms are to inhabit is deposited.

The waste material which the worms digest can be any type of organic material which is biodegradable. Such suitable material can include any of the following: human sewage, animal sewage, waste food, by-products from the food industry, paper including newspaper, card or any other suitable type of refuse. In the case of "dry" waste material, prior to adding this to the decomposing bed, the material is comminuted into small particles to form a fine powder. This helps to accelerate the process of the worm digestion. Any suitable type of machinery can be used for this process. The powder distributor can be pushed manually along the length of the support or can traverse in an automated or semi-automated manner. This fine powder can then, for example, be blown through one of the openings illustrated in Figure 2, across and on to the bed. To aid the process, its is advantageous to dampen this powder, preferably after it has been deposited. A misting system, including spray nozzles, can be provided for this purpose. For sewage, or other "wet" matter, comminution is not necessary and it can be deposited on the bed from a hopper. It is preferable that this wet matter should contain not more than about 8% of solid material for ease of flow.

Prior to the addition of the worms and the organic waste material a layer of "bedding" must be provided on the support structure. This bottom layer can be formed from a mixture of wood chips and grit. Addition of the grit is necessary for the digestion process of the worms. As the worms live in the top 20 to 25 cm of any bed, at least this depth of material must be obtained before any of the castings can be removed. Extra organic waste material can be added to the top at any required time, along with any extra required wood chips and grit.

An optimum temperature for the worms to work in and for the decomposition of the organic material is 14 to 18°C, although any temperature within the range of 12 to 25°C is acceptable. The relative humidity for the process is within the range of 60 to 90%, preferably about 80%. This controlled environment is created and maintained by heaters, ventilators, spraying, etc.

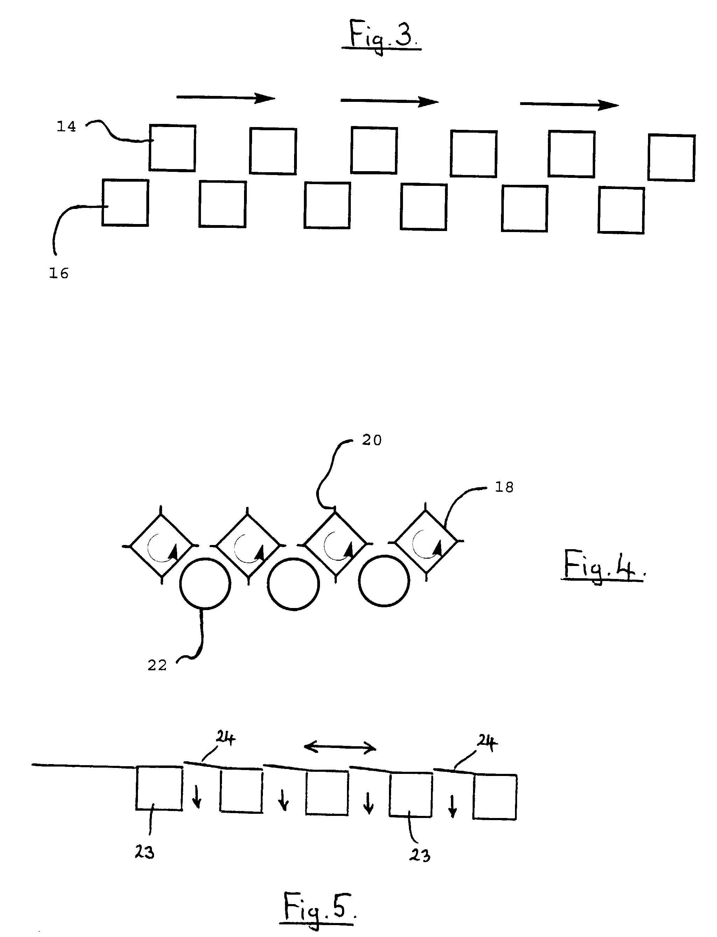

One suitable grid configuration used as the support floor for the bedding is shown in Figure 3. In this example the grid is formed from upper and lower rows of elongate struts 14 and 16 respectively. A suitable cross-section dimension for each strut is 40 mm x 40 mm. By movement of the upper row of struts 14 relative to the lower row 16, the worm castings and hence compost material is enabled to drop through the support floor when required. A significant reduction of the initial organic waste material can be obtained, with up to 75 to 90% reduction in weight and volume of the organic material being possible. In other words, 100 tons of waste can be converted to 25 tons of castings. In operation, air is blown up through the grid 14, 16 which helps to keep the bedding medium loose and accelerates the decomposition process. The air is recycled and can be cooled, heated, filtered etc., to assist in maintaining the controlled environment for the worms.

Figure 4 shows a different type of support for the worm bed. Here one has a bottom row of cylindrical struts 22 and square cross-section struts 18 in the upper row. Rotation of the upper struts 18 will help to drag the required compost material down through the grid. This can be aided by adding small abutments 20 to the corners of the square cross-section struts 18. By rotating the struts 18 relative to the static cylindrical struts 22 one also helps to reduce the occurrence of any blockage within the system. The upward passage of air is also facilitated.

Figure 5 shows a further support structure for the bed. Here one has a single row of spaced square or rectangular cross-section bars 23. Each bar 23 is provided with a blade 24 projecting from an upper margin of the bar. Each blade 24 projects upwards at an angle of about 20° to the horizontal. This embodiment of support is particularly suited for use with very fine waste material or bed material which would tend to fall through between the struts of Figs. 3 and 4. The bars 23 are horizontally displaceable by of the order of 2 to 4 cm and when undergoing that movement the blades cut into the castings which then drop down between the bars in a controlled manner. Normally, the blades provide support for the bed above. Other blade configurations could be used, and indeed not every blade need be displaceable: every other blade could be displaceable.

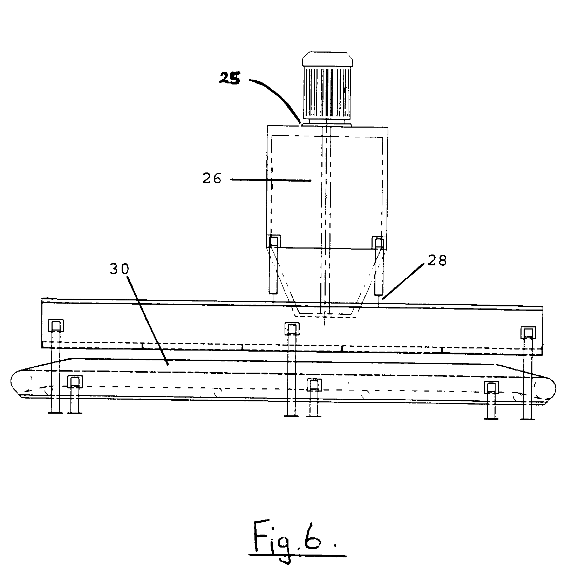

In Figure 6 there is shown an automated version of the apparatus which is particularly suitable for sewage. Organic material can be added into the opening at the top 25 by opening the hinged lid of a process hopper 26. Within the hopper is an agitator operated by a motor. The hopper 26 has wheels which run on a track 28 to allow the hopper to traverse the support and deposit the waste over the support in precise amounts at set timings. The organic waste material is added to the top of the bedding. As opposed to the method of spreading the material manually, this mechanism can be used for slightly wetter material. This system can also be fully automated using a computer control system. A takeaway conveyor belt 30 is provided below the support to remove the worm castings.

A variety of types of worm can be used for the digestion of the organic material. However, the best has been found to be the dendrobaena octaedra, or alternatively dendrobaena veneta. Other suitable types include the eisena major and eisena minor and the dendrodelius. If any of the worms are found to die or not to reproduce, replacements can be added at any time.

The worms prefer to be in a neutral environment, although the process can be carried out from within a pH of 3 to 10. To obtain the optimum neutral environment, an acidic or alkaline solution can be added to the organic material to adjust the pH accordingly. To maintain the preferred humidity of about 80% an overhead misting mechanism (not shown) can be provided to cut in automatically if the humidity drops below a preset level.

Anything from 2000 to 10,000 worms can be used per square metre, with the resultant "bed" containing around 60% volume of worms and 40% volume of organic matter.

## Claims

1. A method of converting biodegradable waste material into a utilisable end product, which comprises establishing a bed of material conducive to sustaining worms, adding worms to the bed, depositing waste material on top of the bed, establishing and maintaining a controlled environment for the worms, and removing worm castings from the bottom of the bed.

2. A method as claimed in claim 1, characterised in that the retrieval of worm castings comprises displacement of support means below the bed.

3. A method as claimed in claim 1 or 2, characterised by a cutting of the worm castings from the bottom of the bed.

4. A method as claimed in any preceding claim, characterised by passing air through the bed.

5. A method as claimed in any preceding claim, characterised in that the maintenance of the controlled environment includes control of the temperature, the moisture, the pH and the amount of air within the bed.

6. Apparatus for converting biodegradable waste material into a utilisable end product, which comprises support means (14, 16; 18, 22; 23) for a bed of material conducive to sustaining worms, means for establishing and maintaining a controlled environment for worms in said bed, and means for the controlled retrieval of worm castings from the bottom of the bed.

7. Apparatus as claimed in claim 6, characterised in that the retrieval of worm castings is effected by causing castings to pass down through the support means for collection below.

8. Apparatus as claimed in claim 6 or 7, characterised in that the support means comprise a grid, elements of which are displaceable to cause the passage of castings down through the grid.

9. Apparatus as claimed in claim 8, characterised in that the grid comprises upper and lower rows of relatively movable spaced parallel bars (14, 16; 18, 22).

10. Apparatus as claimed in claim 8, characterised in that the grid comprises a first lower row of static spaced parallel bars (22), and a second upper row of spaced parallel bars (18) each rotatable about their respective longitudinal axes.

11. Apparatus as claimed in claim 8, characterised in that the grid comprises a row of spaced parallel bars (23) with means (24) overlying the spaces therebetween adapted by a displacement movement to cut castings from the bottom of the bed.

12. Apparatus as claimed in any of claims 6 to 11, characterised by means to control the temperature, the moisture and the amount of air within the bed.
